# EUROPÄISCHE PATENTSCHRIFT

(11) **EP 4 617 428 B1**
(45) Veröffentlichungstag und Bekanntmachung des Hinweises auf die Patenterteilung: **02.09.2026**
(21) Anmeldenummer: 25193623.3
(22) Anmeldetag: 03.06.2024
(51) Int. Cl.: E02D 3/026, E01C 19/23, E01C 19/28

(54) **BAUMASCHINE**
CONSTRUCTION MACHINERY
MACHINE DE CONSTRUCTION

(30) Priorität: 07.07.2023 DE 102023117922
(43) Veröffentlichungstag der Anmeldung: 17.09.2025
(62) Dokumentnummer(n) der früheren Anmeldung(en) nach Art. 76 EPÜ: 24179472.6 / 4 488 450
(73) Patentinhaber: Hamm AG, 95643 Tirschenreuth (DE)
(72) Erfinder: Bäuml, Stefan, Tirschenreuth (DE); Fehr, Tobias, Mitterteich (DE); Vogtmann, Marc, Höchstädt im Fichtelgebirge (DE)
(74) Vertreter: Ruttensperger Lachnit Trossin Gomoll

(56) Entgegenhaltungen:
- DE-A1- 102016 121 724
- DE-A1- 2 533 962
- DE-B3- 102022 200 513
- DE-U1- 8 623 590
- KR-A- 20130 064 872

## Beschreibung

Die vorliegende Erfindung betrifft eine Baumaschine, wie zum Beispiel einen Bodenverdichter, mit einem an einem Maschinenrahmen um eine Drehachse drehbar getragenen Systembereich gemäß dem Oberbegriff des Anspruchs 1.

Eine derartige Baumaschine ist aus der DE 10 2016 121 724 A1 bekannt. Bei dieser als Bodenverdichter ausgebildeten Baumaschine wird Energie zwischen einem in einer Bodenbearbeitungswalze angeordneten Verbraucher elektrischer Energie und einer außerhalb der Bodenbearbeitungswalze angeordneten Quelle elektrischer Energie drahtlos durch Induktion übertragen.

Die DE 10 2022 200 513 B3 offenbart eine Radialdichtungsanordnung vermittels welcher ein in Richtung einer Achse bewegbares oder/und um die Achse drehbares Maschinenteil, zum Beispiel Kolbenstange oder Kolben, bezüglich eines feststehenden Maschinenteils abgedichtet werden kann. Die Radialdichtungsanordnung umfasst einen gegen das bewegbare Maschinenteil vorgespannten Radialdichtring mit einem an dem bewegbaren Maschinenteil dichtend anliegenden Dichtabschnitt. Durch ein zumindest im Bereich seiner Oberfläche elektrisch leitendes Klemmelement ist der Radialdichtring an dem feststehenden Maschinenteil gehalten.

Die DE 86 23 590 U1 offenbart eine als Bodenverdichter ausgebildete Baumaschine, bei welcher ein eine Verdichterwalze drehbar tragender Rahmen schwenkbar an ein Fahrgestell angekoppelt ist. Im Bereich dieser Ankopplung sind die bezüglich einander schwenkbaren Bereiche des Rahmens und des Fahrgestell vermittels einer Dichtungsanordnung bezüglich einander abgedichtet. Die Dichtungsanordnung umfasst zwei aneinander abgestützte und bezüglich einander drehbare, L-förmige Metallringe und in Zuordnung zu jedem der Metallringe einen Dichtring.

Es ist die Aufgabe der vorliegenden Erfindung, eine Baumaschine bereitzustellen, bei welcher eine elektrisch leitende Verbindung in einen rotierenden Systembereich in einfacher und zuverlässiger Art und Weise bereitgestellt werden kann.

Erfindungsgemäß wird diese Aufgabe durch eine Baumaschine, insbesondere Bodenverdichter, gemäß dem unabhängigen Anspruch 1 gelöst.

Die Leitungsverbindung umfasst einen ersten Leitungspfad, wobei der erste Leitungspfad wenigstens eine den drehbaren Systembereich bezüglich eines bezüglich des Maschinenrahmens getragenen, nicht rotierenden Systembereichs dicht abschließende Dichtungsanordnung umfasst.

Die vorliegende Erfindung nutzt zur Übertragung elektrischer Energie bzw. elektrischer Signale zwischen einem drehbaren Systembereich einer Bodenbearbeitungsmaschine und Bereichen außerhalb dieses drehbaren Systembereichs, also einem nicht mit dem drehbaren Systembereich rotierenden Systembereich, Komponenten, welche an der Baumaschine im Allgemeinen vorhanden sind, um andere Funktionen zu erfüllen. So sorgt die wenigstens eine Dichtanordnung primär dafür, dass ein Innenvolumen des drehbaren Systembereichs nach außen abgeschlossen ist, so dass beispielsweise der Austritt von Schmiermittel verhindert werden kann und der Eintritt von Verunreinigungen in diesen Volumenbereich zuverlässig vermieden wird.

Bei einer vorteilhaften Ausgestaltung kann die wenigstens eine Dichtungsanordnung eine Gleitringdichtung umfassen, wobei die Gleitringdichtung einen bezüglich des drehbaren Systembereichs abgestützten ersten Gleitring aus elektrisch leitendem Material und einen bezüglich des nicht rotierenden Systembereichs abgestützten zweiten Gleitring aus elektrisch leitendem Material umfasst, wobei der erste Gleitring und der zweite Gleitring bezüglich einander um die Drehachse drehbar in Richtung der Drehachse aneinander abgestützt sind. Aus Stabilitätsgründen und Haltbarkeitsgründen sind dabei vorteilhafterweise die Gleitringe im Allgemeinen aus Metallmaterial, z.B. Stahl, ausgebildet.

Um eine definierte Positionierung der Geleitsringe zu gewährleisten, wird vorgeschlagen, dass der erste Gleitring vermittels eines ringartigen ersten Dichtelements bezüglich des drehbaren Systembereichs nach radial außen und in einer ersten axialen Richtung abgestützt ist, und dass der zweite Gleitring vermittels eines ringartigen zweiten Dichtelements bezüglich des nicht rotierenden Systembereichs nach radial außen und in einer der ersten axialen Richtung entgegengesetzten zweiten axialen Richtung abgestützt ist.

Um auch im Bereich der unmittelbar aneinander abgestützten Gleitringe den dichten Abschluss gewährleisten zu können, kann vorgesehen sein, dass der erste Gleitring einen ersten Axialabstützbereich aufweist, und dass der zweite Gleitring einen an dem ersten Axialabstützbereich axial abgestützten zweiten Axialabstützbereich aufweist.

Beispielsweise kann zur Belastungsminimierung jeder Abstützbereich von erstem Axialabstützbereich und zweitem Axialabstützbereich eine im Wesentlichen radial sich erstreckende Abstützfläche umfassen.

Der erste Gleitring und der zweite Gleitring können durch das ringartige erste Dichtelement und das ringartige zweite Dichtelement mit ihrem ersten Axialabstützbereich und zweiten Axialabstützbereich in axiale Anlage aneinander gepresst sein.

Zum Herstellen der elektrisch leitenden Verbindung wird weiter vorgeschlagen, dass der erste Gleitring vermittels einer ersten Verbindungsleitung mit der wenigstens einen ersten elektrischen Einheit elektrisch leitend verbunden ist, und dass der zweite Gleitring vermittels einer zweiten Verbindungsleitung mit der wenigstens einen zweiten elektrischen Einheit elektrisch leitend verbunden ist. Diese Verbindungsleitungen können beispielsweise nach Art von Kabeln, Leitungsschienen oder dergleichen ausgebildet sein.

Für eine stabile Kontaktierung kann die erste Verbindungsleitung mit dem ersten Gleitring durch Materialschluss, vorzugsweise Verlöten, oder/und Klemmung oder/und Verschraubung elektrisch leitend verbunden sein, oder/und kann die zweite Verbindungsleitung mit dem zweiten Gleitring durch Materialschluss, vorzugsweise Verlöten, oder/und Klemmung oder/und Verschraubung elektrisch leitend verbunden sein.

Gemäß einem weiteren Aspekt der vorliegenden Erfindung wird vorgeschlagen, dass die Leitungsverbindung einen zweiten Leitungspfad umfasst, wobei der zweite Leitungspfad wenigstens eine den rotierenden Systembereich bezüglich eines bezüglich des Maschinenrahmens getragenen, nicht rotierenden Systembereichs um die Drehachse drehbar lagernde Lagereinheit umfasst.

Die wenigstens eine Lagereinheit kann ein Wälzkörperlager mit einem Lageraußenring aus elektrisch leitendem Material, einem Lagerinnenring aus elektrisch leitendem Material und einer Mehrzahl von an dem Lageraußenring und dem Lagerinnenring abgestützten Wälzkörpern aus elektrisch leitendem Material umfassen. Auch bei derartigen Lagereinheiten ist es aus Stabilitätsgründen und Haltbarkeitsgründen vorteilhaft, wenn die verschiedenen Bestandteile derselben aus Metallmaterial, z.B. Stahl, ausgebildet sind.

Zur elektrischen Kontaktierung kann die wenigstens eine Lagereinheit vermittels einer dritten Verbindungsleitung mit der wenigstens einen ersten elektrischen Einheit elektrisch leitend verbunden sein und kann die wenigstens eine Lagereinheit vermittels einer vierten Verbindungsleitung mit der wenigstens einen zweiten elektrischen Einheit elektrisch leitend verbunden sein.

Insbesondere dann, wenn der zweite Leitungspfad den Masseanschluss der Baumaschine bereitstellt bzw. mit diesem verbunden sein soll, ist es vorteilhaft, wenn die dritte Verbindungsleitung wenigstens ein elektrisch leitendes, tragendes Strukturelement des drehbaren Systembereichs umfasst. Zumindest zum Teil kann dabei der zweite Leitungspfad durch ohnehin vorhandene Komponenten des drehbaren Systembereichs bereitgestellt sein.

Hierfür kann vorgesehen sein, dass die wenigstens eine Lagereinheit an wenigstens einem elektrisch leitenden, tragenden Strukturelement radial oder und axial abgestützt ist.

Beispielsweise kann auch vorgesehen sein, dass der zweite Leitungspfad einen Walzenantriebsmotor umfasst, in welchem ein Rotorbereich vermittels einer oder mehrerer elektrisch leitender Lagereinheiten drehbar bezüglich eines Statorbereichs getragen ist.

Um die Übertragung von Schwingungen zwischen dem drehbaren Systembereich dem Maschinenrahmen zu unterdrücken oder zu mindern, wird vorgeschlagen, dass der nicht rotierende Systembereich vermittels einer Mehrzahl elastischer, elektrisch isolierender Aufhängungselemente an dem Maschinenrahmen getragen ist.

Die wenigstens eine erste elektrische Einheit kann einen Verbraucher elektrischer Energie, vorzugsweise Sensor oder/und Sendeeinheit, umfassen. Weiter kann vorgesehen sein, dass die wenigstens eine zweite elektrische Einheit eine Quelle elektrischer Energie, vorzugsweise Batterie oder/und Generator, umfasst.

Insbesondere bei Ausgestaltung der Baumaschine als Bodenverdichter, wie zum Beispiel selbstfahrender Bodenverdichter, kann der drehbare Systembereich eine Bodenbearbeitungswalze umfassen.

Durch die wenigstens eine Dichtanordnung kann ein eine Unwuchtanordnung mit wenigstens einer um eine Unwuchtdrehachse drehbaren Unwuchtmasse enthaltendes Volumen in der Bodenbearbeitungswalze dicht abgeschlossen sein.

Die vorliegende Erfindung wird nachfolgend mit Bezug auf die beiliegenden Figuren detailliert beschrieben. Es zeigt:
- Fig. 1: eine als selbstfahrender Bodenverdichter ausgebildete Baumaschine in Seitenansicht;
- Fig.2: eine Längsschnittansicht einer Bodenbearbeitungswalze der Baumaschine der Fig. 1;
- Fig. 3: eine vergrößerte Ansicht des Details III in Fig. 2;
- Fig. 4: eine perspektivische Schnittansicht einer Gleitringdichtung der Bodenbearbeitungswalze der Baumaschine der Fig. 1.

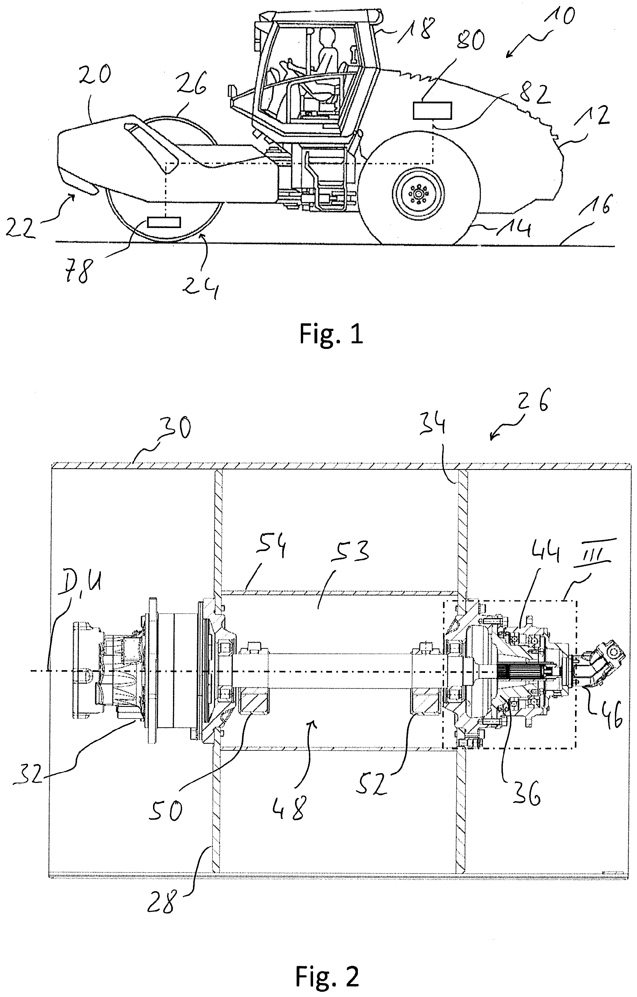

In Fig. 1 ist eine als selbstfahrender Bodenverdichter ausgebildete Baumaschine 10 in Seitenansicht dargestellt. Die Baumaschine 10 umfasst an einem Hinterwagen 12 angetriebene Räder 14, die, angetrieben durch ein am Hinterwagen 12 vorgesehenes Antriebsaggregat, die Bodenbearbeitungsmaschine 10 über einen zu verdichtenden Untergrund 16 bewegen. Am Hinterwagen 12 ist ein Bedienstand 18 vorgesehen, in welchem eine die Bodenbearbeitungsmaschine 10 bedienende Bedienperson Platz findet.

Ein Vorderwagen 20 der Bodenbearbeitungsmaschine 10 ist zum Lenken derselben mit dem Hinterwagen 12 gelenkig verbunden. An dem im Wesentlichen einen Bestandteil eines Maschinenrahmens 22 der Bodenbearbeitungsmaschine 10 bereitstellenden Vorderwagen 20 ist eine einen drehbaren Systembereich 24 der Bodenbearbeitungsmaschine 10 bereitstellende Bodenbearbeitungswalze 26 um eine zur Zeichenebene der Fig. 1 orthogonale Walzendrehachse D drehbar getragen.

Die in Fig. 2 im Längsschnitt dargestellte Bodenbearbeitungswalze 26 ist im dargestellten Ausgestaltungsbeispiel auch zur Drehung angetrieben und weist dazu einen über ein scheibenartiges Trägerelement 28, allgemein auch als Ronde bezeichnet, mit einem Walzenmantel 30 verbundenen Walzenantriebsmotor 32 auf. Ein Statorbereich des Walzenantriebsmotors 32 kann über eine Mehrzahl nicht dargestellter elastischer Aufhängungselemente an dem Vorderwagen 20 getragen sein, während ein Rotorbereich des Walzenantriebsmotors 32 mit dem Trägerelement 28 verbunden ist.

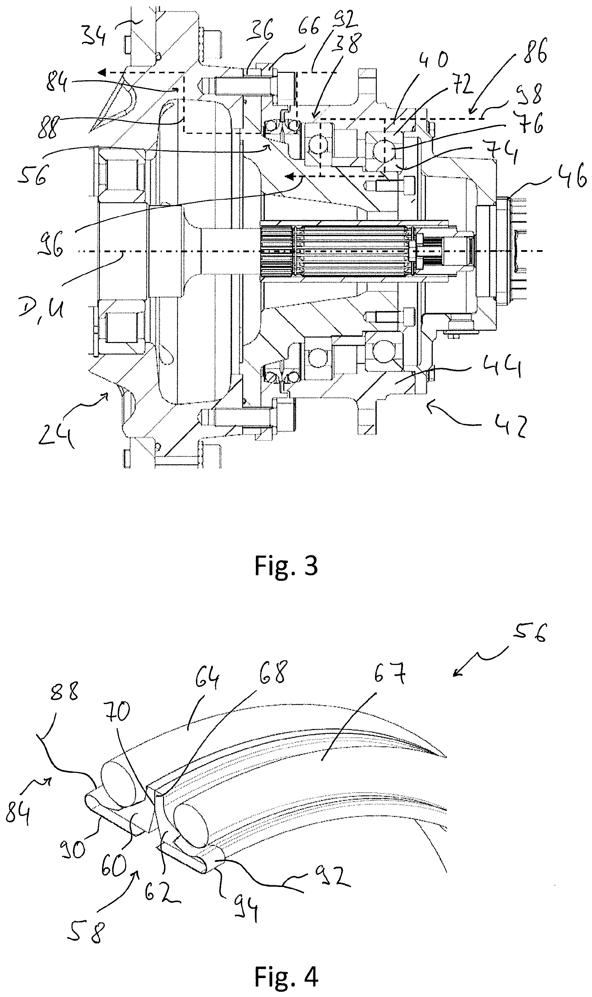

An einem weiteren scheibenartigen Trägerelement 34 ist ein der Lagerung der Bodenbearbeitungswalze 26 in ihrem in Fig. 2 rechts zu erkennenden Endbereich dienendes und ein tragendes Strukturelement der Bodenbearbeitungswalze 26 bereitstellendes erstes Lagerabstützelement 36 beispielsweise durch Verschraubung festgelegt. An dem ersten Lagerabstützelement 36 ist über zwei in Fig. 3 erkennbare, in axialem Abstand zueinander angeordnete Lagereinheiten 38, 40 ein einen oder einen Teil eines nicht rotierenden Systembereichs 42 bereitstellendes zweites Lagerabstützelement 44 abgestützt. Das zweite Lagerabstützelement 44 kann beispielsweise vermittels einer Mehrzahl elastischer Aufhängungselemente an dem Vorderwagen 20 getragen sein.

An dem zweiten Lagerabstützelement 44 ist ein Unwuchtmotor 46 getragen, welcher eine im Inneren der Bodenbearbeitungswalze 26 angeordnete Unwuchtanordnung 48 zur Drehung um eine im dargestellten Ausgestaltungsbeispiel der Walzendrehachse D entsprechende Unwuchtachse U antreibt. Die Unwuchtanordnung 48 umfasst im dargestellten Ausgestaltungsbeispiel zwei in axialem Abstand zueinander angeordnete Unwuchtmassen 50, 52 mit zur Unwuchtdrehachse U exzentrischem Massenschwerpunkt. Das im Wesentlichen die Unwuchtanordnung 48 enthaltende Volumen 53 im Inneren der Bodenbearbeitungswalze 26 ist zwischen den beiden scheibenartigen Trägerelementen 34 durch ein mit diesen beispielsweise durch Verschweißen verbundenes und somit ebenfalls aus Metallmaterial aufgebautes zylindrisches Gehäuse 54 abgeschlossen und ist insbesondere an dem in Fig. 2 rechts erkennbaren Teil auch durch das erste Lagerabstützelement 36 abgeschlossen.

Um zwischen dem ersten Lagerabstützelement 36 und dem zweiten Lagerabstützelement 44, welche sich im Bodenbearbeitungsbetrieb bezüglich einander um die Walzendrehachse D drehen, einen dichten Abschluss zu erreichen, ist eine in Fig. 3 und in Fig. 4 detaillierter erkennbare Dichtanordnung 56 vorgesehen. Die Dichtanordnung 56 umfasst eine Gleitringdichtung 58 mit zwei axial aufeinander folgenden Gleitringen 60, 62. Der erste Gleitring 60 ist über ein beispielsweise O-ringartiges erstes Dichtelement 64 bezüglich des im Wesentlichen die Bodenbearbeitungswalze 26 umfassenden drehbaren Systembereichs 24 dicht abgeschlossen. Dazu ist beispielsweise an dem ersten Lagerabstützelement 36 ein Dichtelement-Abstützelement 66 festgelegt, an welchem das erste Dichtelement 64 nach radial außen bezüglich der Walzendrehachse D und axial in Fig. 3 nach links abgestützt ist. Gleichermaßen ist das erste Dichtelement 64 an dem ersten Gleitring 60 nach radial innen und axial in Fig. 3 nach rechts abgestützt.

Der zweite Gleitring 62 ist über ein O-ringartiges zweites Dichtelement 67 bezüglich des zweiten Lagerabstützelements 44 abgestützt. Dabei ist das zweite Dichtelement 67 nach radial außen und in Fig. 3 nach rechts an dem zweiten Lagerabstützelement 44 abgestützt und ist nach radial innen und in Fig. 3 nach links am zweiten Gleitring 62 abgestützt.

Die beiden Gleitringe 60, 62 sind im Bereich eines ersten Axialabstützbereichs 68 des ersten Gleitrings 60 und eines zweiten Axialabstützbereichs 70 des zweiten Gleitrings 62 axial aneinander abgestützt. Jeder der beiden Axialabstützbereiche 68, 70 kann beispielsweise durch eine im Wesentlichen radial sich erstreckende ringartige Abstützfläche bereitgestellt sein.

Durch die vermittels der beiden Dichtelemente 64, 67 generierte axiale Vorspannung sind die beiden in ihren Axialabstützbereichen 68, 70 unmittelbar aneinander abgestützten Gleitringe 60, 62 axial gegeneinander vorgespannt, so dass diese einen dichten Abschluss erzeugen. Der Eintritt von Verunreinigungen insbesondere auch in das Volumen 53 sowie auch der Austritt von Schmiermittel aus diesem Volumenbereich und aus dem Bereich der beiden Lagereinheiten 38, 40 kann somit durch die als Gleitringdichtung 58 ausgebildete Dichtanordnung 56 zuverlässig verhindert werden.

Jede der beiden Lagereinheiten 38, 40 ist als Wälzkörperlager ausgebildet mit einem äußeren Lagerring 72, welcher nach radial außen und axial bezüglich des zweiten Lagerabstützelements 44 abgestützt ist, einem inneren Lagerring 74, welcher nach radial innen und axial bezüglich des ersten Lagerabstützelements 36 abgestützt ist, und einer Mehrzahl von dazwischen wirkenden bzw. in Umfangsrichtung daran abrollenden Wälzkörpern 76, beispielsweise Kugeln, ausgebildet. Ebenso wie die beiden Gleitringe 60, 62 sind aus Stabilitätsgründen und Haltbarkeitsgründen die Lagerringe 72, 74 und auch die Wälzkörper 76 mit Metallmaterial, z.B. Stahl, aufgebaut.

In Fig. 1 ist in prinzipartiger Weise veranschaulicht, dass in der den drehbaren Systembereich 24 der Baumaschine 10 bereitstellenden Bodenbearbeitungswalze 26 wenigstens eine erste elektrische Einheit 78 angeordnet ist. Die elektrische Einheit 78 kann beispielsweise einen oder mehrere Sensoren, wie z. B. Beschleunigungssensoren, umfassen, um Information über den Bewegungszustand der Bodenbearbeitungswalze 26 bereitzustellen. Die wenigstens eine erste elektrische Einheit 78 kann alternativ oder zusätzlich eine Sende/Empfangs-Einheit umfassen, welche dazu ausgebildet ist, Daten in Form elektrischer Signale abzugeben oder/und zu empfangen.

Beispielsweise am Hinterwagen 12 der Baumaschine 10 ist zumindest eine zweite elektrische Einheit 80 vorgesehen. Die zweite elektrische Einheit 80 kann beispielsweise eine Quelle elektrischer Energie umfassen. Beispielsweise kann die zweite elektrische Einheit 80 eine wiederaufladbare Batterie der Baumaschine 10 umfassen, aus welcher über eine schematisch dargestellte Leitungsverbindung 82 die erste elektrische Einheit 78 in der Bodenbearbeitungswalze 26 mit elektrischer Energie versorgt wird. Alternativ oder zusätzlich kann die zweite elektrische Einheit 80 eine Sende/Empfangs-Einheit umfassen, welche dazu ausgebildet ist, Daten in Form elektrischer Signale abzugeben oder/und zu empfangen.

Beispielsweise kann der Aufbau derart sein, dass die erste elektrische Einheit 78 in der Bodenbearbeitungswalze 26 über die Leitungsverbindung 82 mit elektrischer Energie aus der zweiten elektrischen Einheit 80 gespeist wird. Die von der ersten elektrischen Einheit 78 beispielsweise in Form von Sensorsignalen bereitgestellte Information kann zwischen der ersten elektrischen Einheit 78 und der zweiten elektrischen Einheit 80 oder einer hierfür vorgesehenen weiteren elektrischen Einheit beispielsweise durch Funk oder/und drahtlos über Induktion oder ggf. auch über die Leitungsverbindung 82 übertragen werden.

Insbesondere zum Speisen der ersten elektrischen Einheit 78 mit elektrischer Energie aus der zweiten elektrischen Einheit 80 umfasst die Leitungsverbindung 82 zwei in Fig. 3 prinzipartig angedeutete Leitungspfade 84, 86. Der erste Leitungspfad 84 kann beispielsweise dazu dienen, die erste elektrische Einheit 78 mit dem Pluspol der eine Batterie umfassenden zweiten elektrischen Einheit 80 zu verbinden. Der zweite Leitungspfad 86 kann dazu dienen, die erste elektrische Einheit 80 mit dem Minuspol der eine Batterie umfassenden zweiten elektrischen Einheit 80 zu verbinden bzw. mit dem auch den Maschinenrahmen 22 der Baumaschine 10 umfassenden Masseanschluss zu verbinden.

Um den ersten Leitungspfad 84 in den drehbaren Systembereich 24, also die Bodenbearbeitungswalze 26, zu führen, umfasst dieser die als eine Art Drehdurchführung wirksame Dichtungsanordnung 56. Der erste Gleitring 60 derselben ist vermittels einer beispielsweise als Kabel ausgeführten ersten Verbindungsleitung 88 des ersten Leitungspfads 84 mit der ersten elektrischen Einheit 78 elektrisch leitend verbunden. Hierzu kann beispielsweise die erste Verbindungsleitung 88 vermittels eines Klemmelements 90 mit dem ersten Gleitring 60 elektrisch leitend fest verbunden sein. Alternativ oder zusätzlich kann die erste Verbindungsleitung 88 mit dem ersten Gleitring 60 durch Verschraubung bzw. durch Materialschluss, beispielsweise Verlöten, elektrisch leitend verbunden sein.

Eine zweite beispielsweise als Kabel ausgeführte Verbindungsleitung 92 des ersten Leitungspfads 84 verbindet den zweiten Gleitring 62 elektrisch leitend beispielsweise mit dem Pluspol der eine Batterie umfassenden zweiten elektrischen Einheit 80. Die zweite Verbindungsleitung 92 kann mit dem zweiten Gleitring 62 durch ein Klemmelement 94 elektrisch leitend fest verbunden sein. Alternativ oder zusätzlich kann die feste elektrisch leitende Verbindung zwischen dem zweiten Gleitring 62 und der zweiten Verbindungsleitung 92 durch Verschraubung bzw. Materialschluss, beispielsweise Verlöten, erfolgen.

Da die beiden Gleitringe 60, 62 aus elektrisch leitendem Metallmaterial aufgebaut sind und in direktem Kontakt miteinander stehen, kann im ersten Leitungspfad 84 Strom zwischen den beiden elektrischen Einheiten 78, 80 über die beiden Verbindungsleitungen 88, 92 und die beiden Gleitringe 60, 62 der Gleitringdichtung 58 fließen. Da die beiden Geleitringe 60, 62 lediglich über die mit diesen zusammenwirkenden Dichtelementen 64, 67 bezüglich der Bodenbearbeitungswalze 26 bzw. des Maschinenrahmens 22 abgestützt sind und somit keinen direkten Kontakt zu anderen Komponenten der Baumaschine 10 haben, sind diese durch die im Allgemeinen mit elektrisch isolierendem Material aufgebauten Dichtelemente 64, 67 sowohl bezüglich des drehbaren Systembereichs 24, als auch bezüglich des Maschinenrahmens 22 elektrisch isoliert. Die Gefahr eines über die Geleitringe 60, 62 erzeugten Kurzschlusses besteht somit nicht

Der beispielsweise zur Herstellung eines Masseanschluss dienende zweite Leitungspfad 86 umfasst als eine Art Drehdurchführung zumindest eine der beiden Lagereinheiten 38, 40. Da die beiden Lagereinheiten 38, 40 grundsätzlich mit elektrisch leitendem Metallmaterial aufgebaut sind und deren Lagerinnenringe 74 an dem ersten Lagerstützelement 36 anliegen bzw. abgestützt sind und somit in elektrisch leitendem Kontakt mit diesem sind, kann das erste Lagerstützelement 36 als elektrisch leitendes, tragendes Strukturelement der Bodenbearbeitungswalze 26 einen Teil einer dritten Verbindungsleitung 96 des zweiten Leitungspfads 86 bilden. Auch weitere Bestandteile der Bodenbearbeitungswalze 26, wie z. B. die Trägerelemente 28, 34 und das Gehäuse 54, können als tragende Strukturelemente der Bodenbearbeitungswalze 26 einen Teil der dritten Verbindungsleitung 96 bilden. Ein Minusanschluss bzw. Masseanschluss der ersten elektrischen Einheit 78 kann somit direkt an ein derartiges tragendes Strukturelement der Bodenbearbeitungswalze 26 und somit über die dritte Verbindungsleitung 96 elektrisch leitend mit den beiden Lagereinheiten 38, 40 verbunden werden.

Eine vierte Verbindungsleitung 98 des zweiten Leitungspfads 86 umfasst das die beiden Lageraußenringe 72 der Lagereinheiten 38, 40 abstützende und aus Metallmaterial aufgebaute zweite Lagerabstützelement 44. Wie bereits ausgeführt, ist zur Schwingungsentkopplung das zweite Lagerabstützelement 44 mit dem Vorderwagen 20 bzw. dem Maschinenrahmen 22 der Baumaschine 10, ebenso wie der am anderen axialen Ende der Bodenbearbeitungswalze 26 positionierte Walzenantriebsmotor 32, über elastische und im Allgemeinen elektrisch isolierende Aufhängungselemente getragen. Diese können beispielsweise als Gummipuffer oder dergleichen ausgebildet sein.

Um diesen elektrisch isolierenden Aufhängungsbereich zu überbrücken, umfasst der zweite Leitungspfad 86 als Bestandteil der vierten Verbindungsleitung 98 beispielsweise ein Kabel, welches mit dem zweiten Lagerabstützelement 44 einerseits und beispielsweise dem Vorderwagen 20 andererseits elektrisch leitend verbunden ist und somit das den nicht rotierenden Systembereich 42 bereitstellende zweite Lagerabstützelement 44 mit dem Maschinenrahmen 22 der Baumaschine 10 verbindet. Der Maschinenrahmen 22, welcher im Allgemeinen aus Metallmaterial aufgebaut ist, kann grundsätzlich den Massebereich bereitstellen, an welchem der Minuspol der eine Batterie umfassenden zweiten elektrischen Einheit 80 angeschlossen ist.

Die beiden Leitungspfade 84, 86 der Leitungsverbindung 82 umfassen somit mit der Dichtungsanordnung 56 und den beiden Lagereinheiten 38, 44 als Drehdurchführungen für den elektrischen Strom wirksame Systembereiche, die in einer derartigen Baumaschine 10 grundsätzlich vorhanden sind. Auf kostenintensive und fehleranfällige drahtlos arbeitende Übertragungssysteme insbesondere zum Einspeisen elektrischer Energie in den drehbaren Systembereich 24 kann somit verzichtet werden. Es ist erneut zu betonen, dass die die beiden Leitungspfade 84, 86 umfassende Leitungsverbindung 82 alternativ oder zusätzlich auch genutzt werden kann, um Daten bzw. allgemein Information von bzw. zu der ersten elektrischen Einheit 78 zu übertragen.

Insbesondere der zur Herstellung einer elektrisch leitenden Ankopplung an den Massebereich der Baumaschine 10 dienende zweite Leitungspfad 86 kann alternativ oder zusätzlich zu der Verwendung einer oder beider Lagereinheiten 38, 40 auch den Walzenantriebsmotor 32 umfassen. Beispielsweise kann dessen Statorbereich über ein einen Bestandteil des vierten Leitungspfads 98 bereitstellendes Kabel mit dem Vorderwagen 22 und somit dem Maschinenrahmen 22 der Baumaschine 10 verbunden sein, während der Rotorbereich des Walzenantriebsmotors 32 im drehbaren Systembereich 24, also der Bodenbearbeitungswalze 26, einen an elektrisch leitende, tragende Strukturelemente derselben angekoppelten Bestandteil der dritten Verbindungsleitung 96 bildet. Da auch der Statorbereich des Walzenantriebsmotors 32 über ein oder mehrere im Allgemeinen mit Metallkomponenten aufgebaute Wälzkörperlager drehbar mit dem Rotorbereich desselben gekoppelt ist, können auch derartige im Walzenantriebsmotor 32 vorhandene Lagereinheiten als Drehdurchführung des zweiten Leitungspfads 86 genutzt werden.

## Patentansprüche

1. Baumaschine, insbesondere Bodenverdichter, umfassend wenigstens einen bezüglich eines Maschinenrahmens (22) um eine Drehachse (D) drehbaren Systembereich (24) und an dem drehbaren Systembereich (24) wenigstens eine erste elektrische Einheit (78) und wenigstens eine außerhalb des drehbaren Systembereichs (24) bezüglich des Maschinenrahmens (22) getragene zweite elektrische Einheit (80, **dadurch gekennzeichnet, dass** die wenigstens eine erste elektrische Einheit (78) vermittels einer Leitungsverbindung (82) elektrisch leitend mit wenigstens einer außerhalb des drehbaren Systembereichs (24) bezüglich des Maschinenrahmens (22) getragenen zweiten elektrischen Einheit (80) verbunden ist, dass die Leitungsverbindung (82) einen ersten Leitungspfad (84) umfasst, wobei der erste Leitungspfad (84) wenigstens eine den drehbaren Systembereich (24) bezüglich eines bezüglich des Maschinenrahmens (22) getragenen, nicht rotierenden Systembereichs (42) dicht abschließende Dichtungsanordnung (56) umfasst.

2. Baumaschine nach Anspruch 1,
**dadurch gekennzeichnet, dass** die wenigstens eine Dichtungsanordnung (56) eine Gleitringdichtung (58) umfasst, wobei die Gleitringdichtung (58) einen bezüglich des drehbaren Systembereichs (24) abgestützten ersten Gleitring (60) aus elektrisch leitendem Material und einen bezüglich des nicht rotierenden Systembereichs (42) abgestützten zweiten Gleitring (62) aus elektrisch leitendem Material umfasst, wobei der erste Gleitring (60) und der zweite Gleitring (62) bezüglich einander um die Drehachse (D) drehbar in Richtung der Drehachse (D) aneinander abgestützt sind.

3. Baumaschine nach Anspruch 2,
**dadurch gekennzeichnet, dass** der erste Gleitring (62) vermittels eines ringartigen ersten Dichtelements (64) bezüglich des drehbaren Systembereichs (24) nach radial außen und in einer ersten axialen Richtung abgestützt ist, und dass der zweite Gleitring (62) vermittels eines ringartigen zweiten Dichtelements (67) bezüglich des nicht rotierenden Systembereichs (42) nach radial außen und in einer der ersten axialen Richtung entgegengesetzten zweiten axialen Richtung abgestützt ist.

4. Baumaschine nach Anspruch 2 oder 3,
**dadurch gekennzeichnet, dass** der erste Gleitring (60) einen ersten Axialabstützbereich (68) aufweist, und dass der zweite Gleitring (62) einen an dem ersten Axialabstützbereich (68) axial abgestützten zweiten Axialabstützbereich (70) aufweist.

5. Baumaschine nach Anspruch 4,
**dadurch gekennzeichnet, dass** jeder Abstützbereich von erstem Axialabstützbereich (68) und zweitem Axialabstützbereich (70) eine im Wesentlichen radial sich erstreckende Abstützfläche umfasst.

6. Baumaschine nach Anspruch 3 und Anspruch 4 oder 5,
**dadurch gekennzeichnet, dass** der erste Gleitring (60) und der zweite Gleitring (62) durch das ringartige erste Dichtelement (64) und das ringartige zweite Dichtelement (67) mit ihrem ersten Axialabstützbereich (68) und zweiten Axialabstützbereich (70) in axiale Anlage aneinander gepresst sind.

7. Baumaschine nach einem der Ansprüche 2-6,
**dadurch gekennzeichnet, dass** der erste Gleitring (60) vermittels einer ersten Verbindungsleitung (88) mit der wenigstens einen ersten elektrischen Einheit (78) elektrisch leitend verbunden ist, und dass der zweite Gleitring (62) vermittels einer zweiten Verbindungsleitung (92) mit der wenigstens einen zweiten elektrischen Einheit (80) elektrisch leitend verbunden ist.

8. Baumaschine nach Anspruch 7,
**dadurch gekennzeichnet, dass** die erste Verbindungsleitung (88) mit dem ersten Gleitring (60) durch Materialschluss, vorzugsweise Verlöten, oder/und Klemmung oder/und Verschraubung elektrisch leitend verbunden ist, oder/und dass die zweite Verbindungsleitung (92) mit dem zweiten Gleitring (62) durch Materialschluss, vorzugsweise Verlöten, oder/und Klemmung oder/und Verschraubung elektrisch leitend verbunden ist.

9. Baumaschine nach einem der Ansprüche 1-8,
**dadurch gekennzeichnet, dass** die Leitungsverbindung (82) einen zweiten Leitungspfad (86) umfasst, wobei der zweite Leitungspfad (86) wenigstens eine den rotierenden Systembereich (24) bezüglich eines bezüglich des Maschinenrahmens (22) getragenen, nicht rotierenden Systembereichs (42) um die Drehachse (D) drehbar lagernde Lagereinheit (38, 40) umfasst.

10. Baumaschine nach Anspruch 9,
**dadurch gekennzeichnet, dass** die wenigstens eine Lagereinheit (38, 40) ein Wälzkörperlager mit einem Lageraußenring (72) aus elektrisch leitendem Material, einem Lagerinnenring (74) aus elektrisch leitendem Material und einer Mehrzahl von an dem Lageraußenring (72) und dem Lagerinnenring (74) abgestützten Wälzkörpern (76) aus elektrisch leitendem Material umfasst.

11. Baumaschine nach Anspruch 9 oder 10,
**dadurch gekennzeichnet, dass** die wenigstens eine Lagereinheit (38, 40) vermittels einer dritten Verbindungsleitung (96) mit der wenigstens einen ersten elektrischen Einheit (78) elektrisch leitend verbunden ist, und dass die wenigstens eine Lagereinheit (38, 40) vermittels einer vierten Verbindungsleitung (98) mit der wenigstens einen zweiten elektrischen Einheit (80) elektrisch leitend verbunden ist.

12. Baumaschine nach Anspruch 11,
**dadurch gekennzeichnet, dass** die dritte Verbindungsleitung (96) wenigstens ein elektrisch leitendes, tragendes Strukturelement (36) des drehbaren Systembereichs (24) umfasst,
vorzugsweise wobei die wenigstens eine Lagereinheit (38, 40) an wenigstens einem elektrisch leitenden, tragenden Strukturelement (36) radial oder/und axial abgestützt ist.

13. Baumaschine nach einem der Ansprüche 9-12,
**dadurch gekennzeichnet, dass** der zweite Leitungspfad (86) einen Walzenantriebsmotor (32) umfasst, oder/und dass der nicht rotierende Systembereich (42) vermittels einer Mehrzahl elastischer, elektrisch isolierender Aufhängungselemente an dem Maschinenrahmen (22) getragen ist.

14. Baumaschine nach einem der Ansprüche 1-13,
**dadurch gekennzeichnet, dass** die wenigstens eine erste elektrische Einheit (78) einen Verbraucher elektrischer Energie, vorzugsweise Sensor oder/und Sendeeinheit, umfasst, oder/und dass die wenigstens eine zweite elektrische Einheit (80) eine Quelle elektrischer Energie, vorzugsweise Batterie oder/und Generator, umfasst.

15. Baumaschine nach einem der Ansprüche 1-14,
**dadurch gekennzeichnet, dass** der drehbare Systembereich (24) eine Bodenbearbeitungswalze (26) umfasst,
vorzugsweise wobei durch die wenigstens eine Dichtanordnung (56) ein eine Unwuchtanordnung (48) mit wenigstens einer um eine Unwuchtdrehachse (U) drehbaren Unwuchtmasse (50, 52) enthaltendes Volumen (53) in der Bodenbearbeitungswalze (26) dicht abgeschlossen ist.

## Claims

1. A construction machine, in particular a ground compactor, comprising at least one system region (24) which is rotatable about an axis of rotation (D) with respect to a machine frame (22) and at least one first electrical unit (78) on the rotatable system region (24), and at least one second electrical unit (80) carried outside the rotatable system region (24) with respect to the machine frame (22), **characterized in that** the at least one first electrical unit (78) is electrically conductively connected by means of a line connection (82) to at least one second electrical unit (80) carried outside the rotatable system region (24) with respect to the machine frame (22), **in that** the line connection (82) comprises a first line path (84), wherein the first line path (84) comprises at least one sealing arrangement (56) which tightly closes the rotatable system region (24) with respect to a non-rotating system region (42) carried with respect to the machine frame (22).

2. The construction machine according to claim 1,
**characterized in that** the at least one sealing arrangement (56) comprises a sliding ring seal (58), wherein the sliding ring seal (58) comprises a first sliding ring (60) made of electrically conductive material supported with respect to the rotatable system region (24) and a second sliding ring (62) made of electrically conductive material supported with respect to the non-rotating system region (42), wherein the first sliding ring (60) and the second sliding ring (62) are supported on one another in the direction of the rotation axis (D) so as to be rotatable with respect to one another about the rotation axis (D).

3. The construction machine according to claim 2,
**characterized in that** the first sliding ring (62) is supported by means of a ring-like first sealing element (64) with respect to the rotatable system region (24) radially outward and in a first axial direction, and **in that** the second sliding ring (62) is supported by means of a ring-like second sealing element (67) with respect to the non-rotating system region (42) radially outward and in a second axial direction opposite to the first axial direction.

4. The construction machine according to claim 2 or 3,
**characterized in that** the first sliding ring (60) has a first axial support region (68), and **in that** the second sliding ring (62) has a second axial support region (70) axially supported on the first axial support region (68).

5. The construction machine according to claim 4,
**characterized in that** each support region of the first axial support region (68) and the second axial support region (70) comprises a substantially radially extending support surface.

6. The construction machine according to claim 3 and claim 4 or 5,
**characterized in that** the first sliding ring (60) and the second sliding ring (62) are pressed into axial contact with one another by the ring-like first sealing element (64) and the ring-like second sealing element (67) with their first axial support region (68) and second axial support region (70).

7. The construction machine according to any one of claims 2-6,
**characterized in that** the first sliding ring (60) is electrically conductively connected to the at least one first electrical unit (78) by means of a first connecting line (88), and **in that** the second sliding ring (62) is electrically conductively connected to the at least one second electrical unit (80) by means of a second connecting line (92).

8. The construction machine according to claim 7,
**characterized in that** the first connecting line (88) is electrically conductively connected to the first sliding ring (60) by material connection, preferably soldering, and/or clamping and/or screwing, and/or **in that** the second connecting line (92) is electrically conductively connected to the second sliding ring (62) by material connection, preferably soldering, and/or clamping and/or screwing.

9. The construction machine according to any one of claims 1-8,
**characterized in that** the line connection (82) comprises a second line path (86), wherein the second line path (86) comprises at least one bearing unit (38, 40) which supports the rotating system region (24) rotatably about the axis of rotation (D) with respect to a non-rotating system region (42) carried with respect to the machine frame (22).

10. The construction machine according to claim 9,
**characterized in that** the at least one bearing unit (38, 40) comprises a rolling element bearing with a bearing outer ring (72) made of electrically conductive material, a bearing inner ring (74) made of electrically conductive material and a plurality of rolling elements (76) made of electrically conductive material supported on the bearing outer ring (72) and the bearing inner ring (74).

11. The construction machine according to claim 9 or 10,
**characterized in that** the at least one bearing unit (38, 40) is electrically connected to the at least one first electrical unit (78) by means of a third connecting line (96), and **in that** the at least one bearing unit (38, 40) is electrically connected to the at least one second electrical unit (80) by means of a fourth connecting line (98).

12. The construction machine according to claim 11,
**characterized in that** the third connecting line (96) comprises at least one electrically conductive, supporting structural element (36) of the rotatable system region (24), preferably wherein the at least one bearing unit (38, 40) is supported radially and/or axially on at least one electrically conductive, supporting structural element (36).

13. The construction machine according to any one of claims 9-12,
**characterized in that** the second line path (86) comprises a drum drive motor (32), or/and **in that** the non-rotating system region (42) is supported on the machine frame (22) by means of a plurality of elastic, electrically insulating suspension elements.

14. The construction machine according to any one of claims 1-13,
**characterized in that** the at least one first electrical unit (78) comprises a consumer of electrical energy, preferably a sensor and/or a transmitter unit, and/or **in that** the at least one second electrical unit (80) comprises a source of electrical energy, preferably a battery and/or a generator.

15. The construction machine according to one of claims 1-14,
**characterized in that** the rotatable system region (24) comprises a ground processing drum (26),
preferably wherein a volume (53) in the ground processing drum (26) containing an unbalance arrangement (48) with at least one unbalance mass (50, 52) rotatable about an unbalance axis of rotation (U) is tightly sealed by the at least one sealing arrangement (56).

## Revendications

1. Une machine de construction, en particulier compacteur de sol, comprenant au moins une zone de système (24) qui peut tourner autour d'un axe de rotation (D) par rapport à un châssis de machine (22) et au moins une première unité électrique (78) sur la zone de système rotative (24) et au moins une deuxième unité électrique (80) portée à l'extérieur de la zone de système rotative (24) par rapport au châssis de machine (22), **caractérisée en ce que** ladite au moins une première unité électrique (78) est reliée de manière électriquement conductrice au moyen d'une connexion de ligne (82) à au moins une deuxième unité électrique (80) portée à l'extérieur de la zone de système rotative (24) par rapport au châssis de machine (22), **en ce que** la connexion de ligne (82) comprend un premier chemin de ligne (84), le premier chemin de ligne (84) comprenant au moins un dispositif d'étanchéité (56) qui ferme hermétiquement la zone de système rotative (24) par rapport à une zone de système non rotative (42) supportée par rapport au châssis de machine (22).

2. La machine de construction selon la revendication 1,
**caractérisée en ce que** ledit au moins un dispositif d'étanchéité (56) comprend un joint de bague coulissante (58), dans lequel le joint de bague coulissante (58) comprend une première bague coulissante (60) en matériau électriquement conducteur supportée par rapport à la zone de système rotative (24) et une deuxième bague coulissante (62) en matériau électriquement conducteur supportée par rapport à la zone de système non rotative (42), la première bague coulissante (60) et la deuxième bague coulissante (62) étant supportées l'une sur l'autre dans la direction de l'axe de rotation (D) de manière à pouvoir tourner l'une par rapport à l'autre autour de l'axe de rotation (D).

3. La machine de construction selon la revendication 2,
**caractérisée en ce que** la première bague coulissante (62) est supportée au moyen d'un premier élément d'étanchéité annulaire (64) par rapport à la zone de système rotative (24) radialement vers l'extérieur et dans une première direction axiale, et **en ce que** la deuxième bague coulissante (62) est supportée au moyen d'un deuxième élément d'étanchéité annulaire (67) par rapport à la zone de système non rotative (42) radialement vers l'extérieur et dans une deuxième direction axiale opposée à la première direction axiale.

4. La machine de construction selon la revendication 2 ou 3,
**caractérisée en ce que** la première bague coulissante (60) comporte une première zone d'appui axiale (68), et **en ce que** la deuxième bague coulissante (62) comporte une deuxième zone d'appui axiale (70) appuyée axialement sur la première zone d'appui axiale (68).

5. La machine de construction selon la revendication 4,
**caractérisée en ce que** chaque zone d'appui de la première zone d'appui axiale (68) et de la deuxième zone d'appui axiale (70) comprend une surface de support s'étendant sensiblement radialement.

6. La machine de construction selon la revendication 3 et la revendication 4 ou 5, **caractérisée en ce que** la première bague coulissante (60) et la deuxième bague coulissante (62) sont pressées en contact axial l'une avec l'autre par le premier élément d'étanchéité annulaire (64) et le deuxième élément d'étanchéité annulaire (67) avec leur première zone d'appui axial (68) et leur deuxième zone d'appui axial (70).

7. La machine de construction selon l'une quelconque des revendications 2 à 6, **caractérisée en ce que** la première bague coulissante (60) est reliée de manière électriquement conductrice à au moins une première unité électrique (78) au moyen d'une première ligne de connexion (88), et **en ce que** la deuxième bague coulissante (62) est reliée de manière électriquement conductrice à au moins une deuxième unité électrique (80) au moyen d'une deuxième ligne de connexion (92).

8. La machine de construction selon la revendication 7,
**caractérisée en ce que** la première ligne de connexion (88) est reliée de manière électriquement conductrice à la première bague coulissante (60) par une connexion matérielle, de préférence par soudure, et/ou par serrage et/ou par vissage, et/ou **en ce que** la deuxième ligne de connexion (92) est reliée de manière électriquement conductrice à la deuxième bague coulissante (62) par une connexion matérielle, de préférence par soudure, et/ou par serrage et/ou par vissage.

9. La machine de construction selon une des revendications 1 à 8, **caractérisée en ce que** la connexion de ligne (82) comprend un deuxième chemin de ligne (86), le deuxième chemin de ligne (86) comprenant au moins une unité de palier (38, 40) qui supporte la zone de système rotative (24) de manière rotative autour de l'axe de rotation (D) par rapport à une zone de système non rotative (42) supportée par rapport au châssis de machine (22).

10. La machine de construction selon la revendication 9,
**caractérisée en ce que** ladite au moins une unité de palier (38, 40) comprend un roulement à éléments roulants avec une bague extérieure de palier (72) en matériau électriquement conducteur, une bague intérieure de palier (74) en matériau électriquement conducteur et une pluralité d'éléments roulants (76) en matériau électriquement conducteur supportés sur la bague extérieure de palier (72) et la bague intérieure de palier (74).

11. La machine de construction selon la revendication 9 ou 10,
**caractérisée en ce que** ladite au moins une unité de palier (38, 40) est connectée électriquement à ladite au moins une première unité électrique (78) au moyen d'une troisième ligne de connexion (96), et **en ce que** ladite au moins une unité de palier (38, 40) est connectée électriquement à ladite au moins une deuxième unité électrique (80) au moyen d'une quatrième ligne de connexion (98).

12. La machine de construction selon la revendication 11,
**caractérisée en ce que** la troisième ligne de connexion (96) comprend au moins un élément structurel de support électriquement conducteur (36) de la zone de système rotative (24),
de préférence dans laquelle ladite au moins une unité de palier (38, 40) est supportée radialement et/ou axialement sur au moins un élément structurel de support électriquement conducteur (36).

13. La machine de construction selon l'une quelconque des revendications 9 à 12, **caractérisée en ce que** le deuxième chemin de ligne (86) comprend un moteur d'entraînement à rouleaux (32), et/ou **en ce que** la zone de système non rotative (42) est supportée sur le châssis de machine (22) au moyen d'une pluralité d'éléments de suspension élastiques et électriquement isolants.

14. La machine de construction selon l'une quelconque des revendications 1 à 13, **caractérisée en ce que** ladite au moins une première unité électrique (78) comprend un consommateur d'énergie électrique, de préférence un capteur et/ou une unité émettrice, et/ou **en ce que** ladite au moins une deuxième unité électrique (80) comprend une source d'énergie électrique, de préférence une batterie et/ou un générateur.

15. La machine de construction selon l'une quelconque des revendications 1 à 14, **caractérisée en ce que** la zone de système rotative (24) comprend un rouleau de traitement du sol (26),
de préférence dans lequel un volume (53) dans le rouleau de traitement du sol (26) contenant un dispositif de balourd (48) avec au moins une masse de balourd (50, 52) pouvant tourner autour d'un axe de rotation de balourd (U) est hermétiquement scellé par le dispositif d'étanchéité (56).
